# EUROPEAN PATENT APPLICATION

(11) **EP 2 848 239 A1**
(43) Date of publication of application: **18.03.2015**
(21) Application number: 14182273.4
(22) Date of filing: 26.08.2014
(51) Int. Cl.: A61H 3/04, B62B 5/00

(54) **Walking assistance moving vehicle**

(30) Priority: 30.08.2013 JP 2013180512
(71) Applicant: Funai Electric Advanced Applied Technology Research Institute Inc., Osaka 574-0013 (JP)
(72) Inventor: Nakada, Takeshi, Daito-shi, Osaka 574-0013 (JP)
(74) Representative: Global IP Europe Patentanwaltskanzlei

(57) **Abstract**

A walking assistance moving vehicle includes a walking assistance moving vehicle main body configured to assist walking of a user, a speed sensor (21) configured to sense speed of the walking assistance moving vehicle main body, and a controller (22) configured to decelerate the walking assistance moving vehicle main body according to the speed sensed by the speed sensor (21).

## Description

### CROSS-REFERENCE TO RELATED APPLICATIONS

This application claims priority to Japanese Patent Application No. 2013-180512 filed on August 30, 2013. The entire disclosure of Japanese Patent Application No. 2013-180512 is hereby incorporated herein by reference.

### BACKGROUND

### Field of the Invention

The present invention generally relates to a walking assistance moving vehicle. More specifically, the present invention relates to a walking assistance moving vehicle with a controller for performing control to assist walking of a user.

### Background Information

Walking assistance moving vehicles with a controller for performing control to assist the walking of the user are known in the art (see Japanese Unexamined Patent Application Publication No. 2002-352380 (Patent Literature 1), for example).

The above-mentioned Patent Literature 1 discloses a pedestrian guide device includes an external sensor for sensing the surrounding video information, a vehicle body to which driving power is imparted in response to the walking of the user (or pedestrian), and a system controller for controlling the movement of the vehicle body based on the sensing result of the external sensor. This pedestrian guide device is configured to perform control to decelerate or stop the vehicle by means of the system controller when a forward obstacle is recognized based on the sensing result of the external sensor.

### SUMMARY

It has been discovered that with the pedestrian guide device discussed in the above-mentioned Patent Literature 1, however, if the movement speed of the device is high, then the deceleration becomes inadequate to stop the device before reaching the obstacle. Therefore, the obstacle cannot be avoided in this case.

This invention is conceived in light of the above-mentioned problem. One object of this invention is to provide a walking assistance moving vehicle with which it is possible to easily avoid obstacles regardless of the movement speed.

In view of the state of the known technology, a walking assistance moving vehicle includes a walking assistance moving vehicle main body configured to assist walking of a user, a speed sensor configured to sense speed of the walking assistance moving vehicle main body, and a controller configured to decelerate the walking assistance moving vehicle main body according to the speed sensed by the speed sensor.

Also other objects, features, aspects and advantages of the present disclosure will become apparent to those skilled in the art from the following detailed description, which, taken in conjunction with the annexed drawings, discloses one embodiment of the waking assistance moving vehicle.

### BRIEF DESCRIPTION OF THE DRAWINGS

Referring now to the attached drawings which form a part of this original disclosure:
FIG. 1 is a schematic diagram illustrating a walking assistance moving vehicle in accordance with a first embodiment;
FIG. 2 is a block diagram of the configuration of the walking assistance moving vehicle in accordance with the first embodiment;
FIG. 3 is a schematic diagram illustrating an upward forward obstacle in the first embodiment;
FIG. 4 is a schematic diagram illustrating a downward forward obstacle in the first embodiment;
FIG. 5 is a flowchart of deceleration/stop processing of the walking assistance moving vehicle in the first embodiment;
FIG. 6 is a block diagram of the configuration of the walking assistance moving vehicle in accordance with a second embodiment;
FIG. 7 is a flowchart of deceleration/stop processing of the walking assistance moving vehicle in the second embodiment;
FIG. 8 is a flowchart of recovery processing from a stopped state of the walking assistance moving vehicle in the second embodiment; and
FIG. 9 is a flowchart of recovery processing from a stopped state of the walking assistance moving vehicle in a third embodiment.

### DETAILED DESCRIPTION OF EMBODIMENTS

Selected embodiments will now be explained with reference to the drawings. It will be apparent to those skilled in the art from this disclosure that the following descriptions of the embodiments are provided for illustration only and not for the purpose of limiting the invention as defined by the appended claims and their equivalents.

### FIRST EMBODIMENT

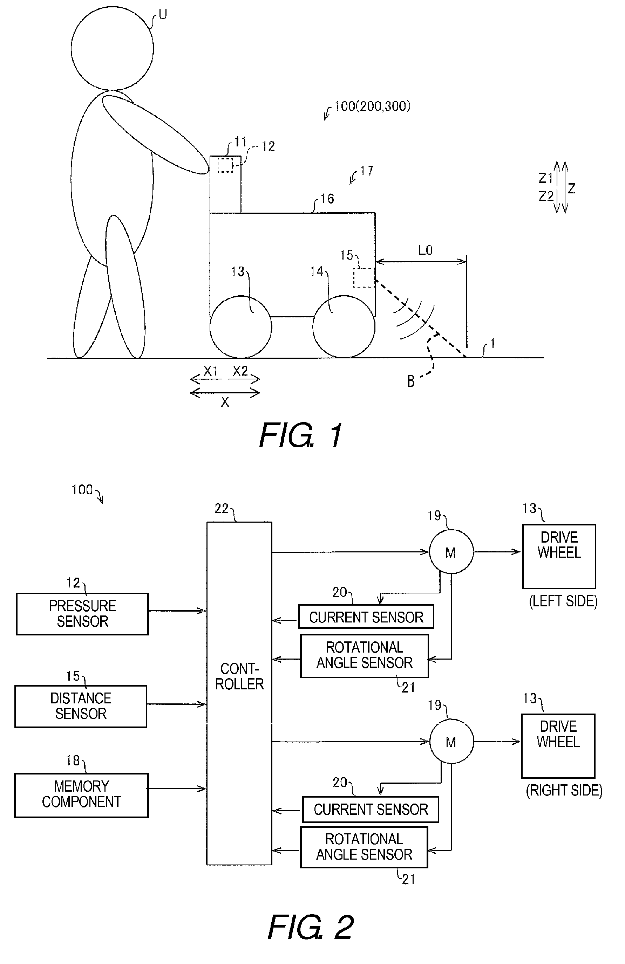

Referring to FIGS. 1 to 5, a walking assistance moving vehicle 100 is illustrated in accordance with a first embodiment.

As shown in FIG. 1, the walking assistance moving vehicle 100 in accordance with the first embodiment includes a grip component 11, a pressure sensor 12, a pair of left and right drive wheels 13, a pair of free wheels 14, a distance sensor 15, and a chassis 16. The grip component 11 is gripped by a user U. The pressure sensor 12 detects the input force imparted to the grip component 11. The left and right drive wheels 13 are driven by a pair of drive motors 19 (discussed below; see FIG. 2). The free wheels 14 rotate along with the movement of the drive wheels 13. In the illustrated embodiment, the walking assistance moving vehicle 100 has the pair of the free wheels 14. However, the number of the free wheels 14 can be different, such as one or more than three. The distance sensor 15 senses the distance ahead of the walking assistance moving vehicle 100 (the X2 direction side in FIG. 1). The chassis 16 on which various kinds of cargo can be loaded. The grip component 11, the pair of drive wheels 13, the free wheels 14, and the chassis 16 form a walking assistance moving vehicle main body 17. The distance sensor 15 is an example of the "distance sensor" of the present invention. In the illustrated embodiment, the walking assistance moving vehicle 100 is a manually propulsion vehicle, such as a hand cart, a walking assist cart, a wheeled walker or a rollator, that serves both to assist the user (primarily an elderly person with limited mobility) and to function as a chair for resting on and a basket for carrying things. However, the present invention can also be equally applied to strollers, push or pull carts, wheeled walkers, wheeled canes, wheelchairs, and so forth. Also, the walking assistance moving vehicle 100 is basically a manually propelled device that is pushed or pulled by a person, and also include the drive motors 19. However, the walking assistance moving vehicle 100 can include other type of a prime mover, such as an engine. Furthermore, in the illustrated embodiment, the walking assistance moving vehicle 100 basically is a wheeled vehicle with at least one wheel. However, the walking assistance moving vehicle 100 can be other types of vehicles, such as tracked vehicles and so forth.

In the illustrated embodiment, as shown in FIGS. 1, 3 and 4, the X direction indicates the longitudinal direction of the walking assistance moving vehicle 100. Furthermore, the X1 direction indicates the rearward direction along the longitudinal direction of the walking assistance moving vehicle 100, while the X2 direction indicates the forward direction along the longitudinal direction of the walking assistance moving vehicle 100. Thus, in the illustrated embodiment, the movement of the walking assistance moving vehicle 100 in the X1 direction is referred as a rearward movement, while the movement of the walking assistance moving vehicle 100 in the X2 direction is refereed as a forward movement. Similarly, the walking of the user U in the X1 direction is also referred as a rearward walking of the user U, while the walking of the user U in the X2 direction is also refereed as a forward walking of the user U. Also, in the illustrated embodiment, the Z direction indicates the vertical direction of the walking assistance moving vehicle 100. Furthermore, the Z1 direction indicates the vertically upward direction, while the Z2 direction indicates the vertically downward direction.

As shown in FIG. 2, the walking assistance moving vehicle 100 further includes a memory component 18, the drive motors 19, a pair of current sensors 20, a pair of rotational angle sensors 21, and a controller 22. The rotational angle sensors 21 is an example of the "speed sensor" of the present invention.

The pressure sensor 12 is configured to sense the pressure inputted by the user U to the grip component 11 (see FIG. 1). The pressure sensor 12 is also configured to sense the magnitude and direction of force inputted by the user U. The pressure sensor 12 is also configured to output the sensing result to the controller 22. The controller 22 is configured to perform control to change the amount of drive force and the drive direction (rotation direction) of the drive motors 19 based on information about the input force sensed by the pressure sensor 12.

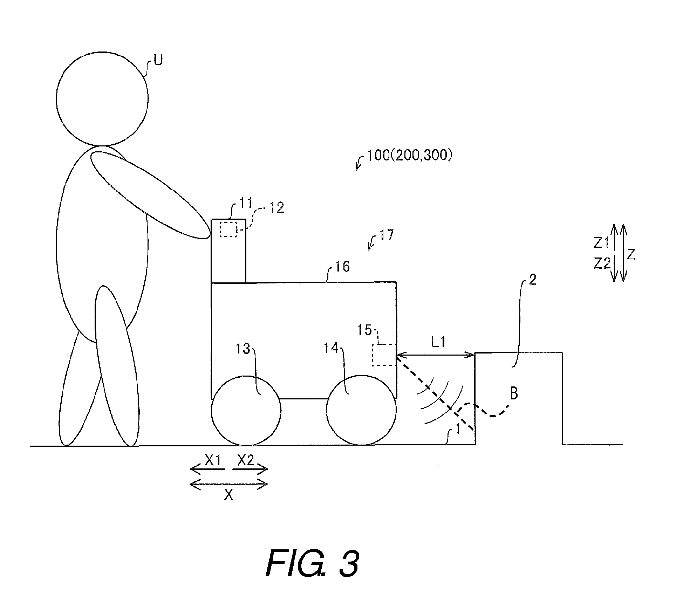

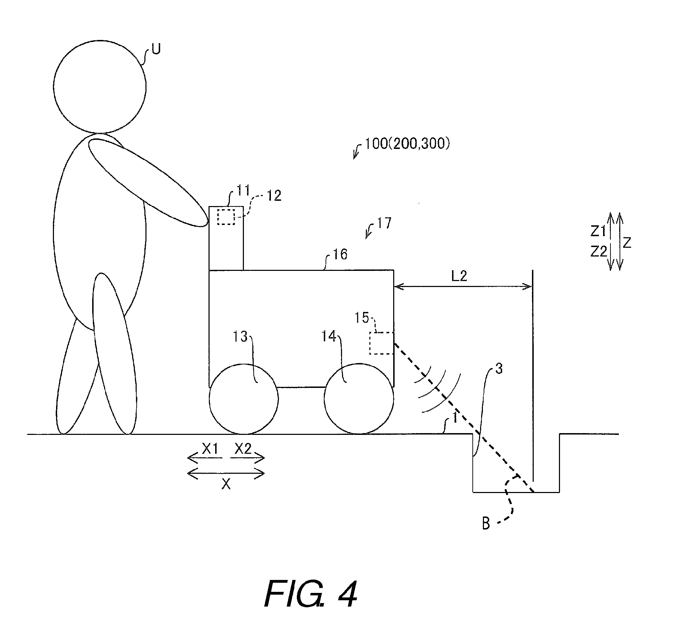

The distance sensor 15 is configured to sense the distance between the walking assistance moving vehicle 100 and a forward obstacle that is ahead of (on the X2 direction side of) the walking assistance moving vehicle 100, or the distance L0 to the ground 1 (see FIG. 1). The term "forward obstacle" here refers to an obstacle located ahead of (on the X2 direction side of) the walking assistance moving vehicle 100. A forward obstacle includes an upward forward obstacle 2 as shown in FIG. 3, and a downward forward obstacle 3 as shown in FIG. 4. More specifically, the "upward forward obstacle 2" refers to an obstacle that sticks up from (to the Z1 direction side of) the ground 1, such as a wall, a person, an up stairway, a bump, and the like. In other words, the upward forward obstacle 2 has an upward deflection relative to the surface of the ground 1 (e.g., an upward deflection obstacle). The "downward forward obstacle 3" refers to an obstacle that is depressed below (to the Z2 direction side of) the ground 1, such as a precipice, a curb going from a sidewalk down to a roadway, a down stairway, a depression, and the like. In other words, the downward forward obstacle 3 has a downward deflection relative to the surface of the ground 1 (e.g., a downward deflection obstacle).

The distance sensor 15 (see FIG. 2) is configured to sense the distance L1 between the walking assistance moving vehicle 100 and the upward forward obstacle 2 (see FIG. 3), and the distance L2 between the walking assistance moving vehicle 100 and the downward forward obstacle 3 (see FIG. 4). Here, the distance L1 is a distance that is relatively shorter than the distance L0 between the walking assistance moving vehicle 100 and the ground 1 (see FIG. 1). Also, the distance L2 is relatively longer than the distance L0 between the walking assistance moving vehicle 100 and the ground 1. The distance L1 is an example of the "first distance" of the present invention. The distance L2 is an example of the "second distance" of the present invention.

The distance sensor 15 is also configured to output the sensed distance to the controller 22. Any type of distance sensor can be used for the distance sensor 15, but an example is a reflection type of distance sensor that makes use of ultrasonic waves, infrared light, etc. More specifically, in the illustrated embodiment, as shown in FIG. 1, the distance sensor 15 forwardly and downwardly emits a beam of ultrasonic waves, infrared light and the like, to the ground 1 and receives the return beam from the ground 1 (a direction of the beam is indicated with a dashed line B from distance sensor 15 in FIGS. 1, 3 and 4), thereby sensing the distance L0 from the distance sensor 15 to the ground 1 in a conventional manner. In the illustrated embodiment, the distance L0 indicates the distance from the distance sensor 15 to a reflection point of the beam on the ground 1 in the X direction. Similarly, as shown in FIG. 3, the distance sensor 15 forwardly and downwardly emits the beam to the ground 1 in the same manner as shown in FIG. 1. However, the beam reflects on the side of the upward forward obstacle 2 and returns to the distance sensor 15, thereby sensing the distance L1 from the distance sensor 15 to the upward forward obstacle 2, which is basically smaller than the distance L0. In particular, as shown in FIG. 3, the distance L1 indicates the distance from the distance sensor 15 to a reflection point of the beam on the upward forward obstacle 2 in the X direction. Also, as shown in FIG. 4, the distance sensor 15 forwardly and downwardly emits the beam to the ground 1 in the same manner as shown in FIG. 1. However, the beam reflects on the bottom of the downward forward obstacle 3 and returns to the distance sensor 15, thereby sensing the distance L2 from the distance sensor 15 to the downward forward obstacle 3, which is basically larger than the distance L0. In particular, as shown in FIG. 4, the distance L2 indicates the distance from the distance sensor 15 to a reflection point of the beam on the downward forward obstacle 3 in the X direction.

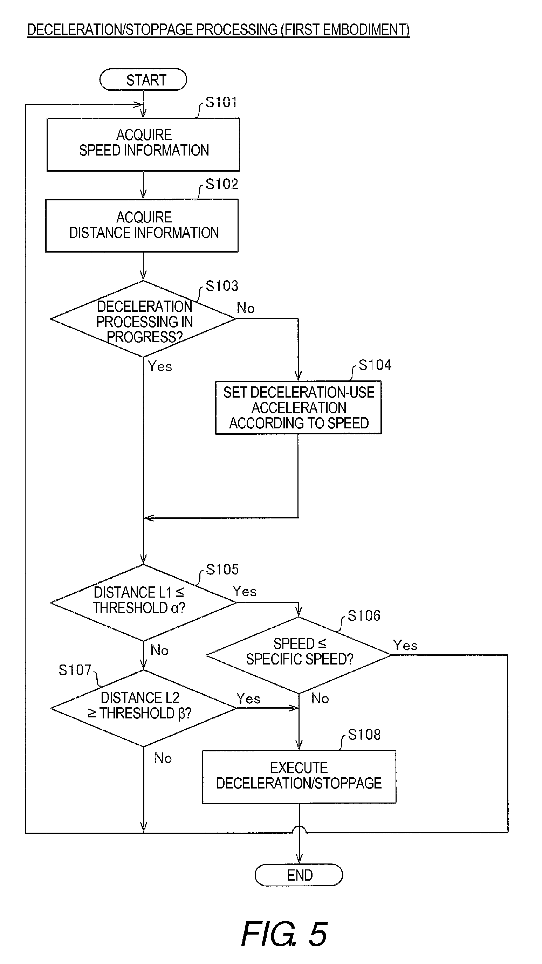

The memory component 18 is configured to store various kinds of data (such as distance thresholds), programs, and so forth. The term "distance threshold" here is a value that is compared with a distance sensed by the distance sensor 15, and is a value that is set in order to determine whether or not to execute the deceleration or stoppage of the walking assistance moving vehicle 100 as shown in FIG. 5. More specifically, the deceleration or stoppage of the walking assistance moving vehicle 100 is executed by the controller 22 based on the comparison between the distance (L1, L2) sensed by the distance sensor 15 and the distance threshold. In particular, the distance threshold here includes two thresholds: a threshold α that is used as a reference in determining operations with respect to the distance L1 detected by the distance sensor 15, and a threshold β that is used as a reference in determining operations with respect to the distance L2. More specifically, the deceleration or stoppage of the walking assistance moving vehicle 100 is executed by the controller 22 when the distance L1 is equal to or smaller than the threshold α, or when the distance L2 is equal to or larger than the threshold β. The threshold α is an example of the "first distance threshold" of the present invention. The threshold β is an example of the "second distance threshold."

The drive motors 19 are linked to each of the drive wheels 13, and are configured to drive the drive wheels 13.

The current sensors 20 are configured to sense the amount of current flowing to the drive motors 19. The current sensors 20 are also configured to output the sensed current values to the controller 22. The controller 22 is configured to calculate the torque being applied by the drive motors 19 to the drive wheels 13 based on acquired information about the current value.

The rotational angle sensors 21 are configured to sense the rotational angles of the drive motors 19. The rotational angle sensors 21 are configured to output the sensed rotational angles to the controller 22. The controller 22 are configured to calculate the rotational speed of the drive wheels 13 based on the acquired information about rotational angle, and to calculate the movement speed of the walking assistance moving vehicle 100 based on the rotational speed and the circumference or perimeter of the drive wheels 13. That is, the rotational angle sensors 21 are configured to sense information related to speed. Any type of rotational angle sensor can be used for the rotational angle sensors 21, examples of which include Hall sensors, resolvers, rotary encoders, and other such rotational angle sensors. The controller 22 is configured to control the various constituent elements of the walking assistance moving vehicle 100.

In the illustrated embodiment, the controller 22 includes a microprocessor or a microcomputer with a control program that controls various components of the walking assistance moving vehicle 100. The controller 22 can also include other conventional components such as an input interface circuit, an output interface circuit, and storage devices such as a ROM (Read Only Memory) device and a RAM (Random Access Memory) device. The microcomputer of the controller 22 is programmed to control the various components of the walking assistance moving vehicle 100. The memory circuit stores processing results and control programs that are run by the microcomputer. The internal RAM of the controller 22 stores statuses of operational flags and various control data. The internal ROM of the controller 22 stores the programs for various operations. The controller 22 is capable of selectively controlling any of the components of the walking assistance moving vehicle 100 in accordance with the control program. It will be apparent to those skilled in the art from this disclosure that the precise structure and algorithms for the controller 22 can be any combination of hardware and software that will carry out the functions of the present invention.

Next, the operation of the walking assistance moving vehicle 100 to assist the forward (X2 direction side) walking of the user U will now be described through reference to FIGS. 1 and 2.

The user U (see FIG. 1) grips the grip component 11 of the walking assistance moving vehicle 100 (see FIG. 1) with both hands and starts walking forward. The pressure sensor 12 of the walking assistance moving vehicle 100 senses forward input force or operation force that accompanies the walking of the user U. The walking assistance moving vehicle 100 controls the drive motors 19 based on the forward input force exerted by the user U. More specifically, the walking assistance moving vehicle 100 generates drive force at the drive motors 19 so as to move forward. The magnitude of this drive force is proportional to the magnitude of the input force from the user U (the force at which the walking assistance moving vehicle 100 is pushed forward). The drive wheels 13 linked to the drive motors 19 are then rotated, which starts the walking assistance moving vehicle 100 moving forward. This allows the user U to benefit during walking from the assist provided by the drive force of the drive motors 19 mounted to the walking assistance moving vehicle 100. Here, an operation for assisting the forward walking of the user U is described, but the same applies to an operation for assisting rearward walking of the user U. Also, the walking assistance moving vehicle 100 can turn to the left or right when the user U operates the grip component 11 to the left or right. Specifically, the waling assistance moving vehicle 100 can generate the drive force to turn left or right for assisting the turn of the user U to the left or right in response to the user's operation of the grip component 11 to the left or right.

Next, the deceleration or stoppage processing of the walking assistance moving vehicle 100 will be described through reference to FIGS. 2 and 5. This deceleration or stoppage processing differs from deceleration or stoppage performed voluntarily by the user U in that when there is the forward obstacle 2 or 3 ahead, the walking assistance moving vehicle 100 senses the forward obstacle 2 or 3, and performs deceleration or stoppage processing to execute a deceleration or stoppage operation. In the illustrated embodiment, this deceleration or stoppage processing can be commenced in response to detecting the operation of the walking assistance moving vehicle 100 by the user U (e.g., detecting the input force with the pressure sensor 12, detecting movement of the walking assistance moving vehicle 100 by the rotational angular sensors 21, and the like).

In this first embodiment, first, the controller 22 (see FIG. 2) acquires information about the speed of the walking assistance moving vehicle 100 (see FIG. 2) sensed by the rotational angle sensors 21 (see FIG. 2) in step S101. Then, in step S102, the controller 22 acquires information about the distance sensed by the distance sensor 15 (the distance L1 or L2 between the walking assistance moving vehicle 100 and the upward forward obstacle 2 or downward forward obstacle 3 ahead of the walking assistance moving vehicle 100, or the distance L0 to the ground 1). Then in step S103, the controller 22 then determines whether or not the walking assistance moving vehicle 100 is in the midst of deceleration processing.

If the deceleration processing is not in progress (or just started), in step S104 the controller 22 sets the deceleration-use acceleration according to the acquired speed information. More specifically, the controller 22 sets the deceleration-use acceleration high or large when the speed is relatively high. The controller 22 sets the deceleration-use acceleration low or small when the speed is relatively low. In other words, the controller 22 set the deceleration-use acceleration to decelerate the walking assistance moving vehicle 100 more when the speed is high than when the speed is low.

When deceleration processing is in progress, in step S105 the controller 22 determines whether or not the distance L1 sensed by the distance sensor 15 is below the threshold α based on the acquired distance information. If the distance L1 is determined to be equal to or smaller than the threshold α, then in step S106 the controller 22 determines whether or not the speed of the walking assistance moving vehicle 100 is equal to or smaller than a specific speed. The "specific speed" here is a relatively low speed, and a speed of about 1 km/h can be used favorably as the specific speed, for example. The controller 22 proceeds to step S108 if the speed of the walking assistance moving vehicle 100 is not equal to or smaller than the specific speed in step S106. On the other hand, the controller 22 proceeds to step S101 if the speed of the walking assistance moving vehicle 100 is equal to or smaller than the specific speed.

In step S105, if the distance L1 sensed by the distance sensor 15 is not equal to or smaller than the threshold α, then the controller 22 proceeds to step S107. The controller 22 then determines whether or not the distance L2 sensed by the distance sensor 15 is equal to or larger than the threshold β in step S107. If the distance L2 sensed by the distance sensor 15 is equal to or larger than the threshold β, then the controller 22 executes the deceleration or stoppage of the walking assistance moving vehicle 100 in step S108.

If the distance L2 sensed by the distance sensor 15 is not equal to or larger than the threshold β, then the controller 22 proceeds to step S101 and repeats the processing for setting the deceleration-use acceleration. The walking assistance moving vehicle 100 of the present invention is configured as above.

The following effect is obtained with the first embodiment.

As discussed above, in the first embodiment, the controller 22 is provided for performing control to decelerate the walking assistance moving vehicle main body 17 (the walking assistance moving vehicle 100) according to the speed sensed by the rotational angle sensors 21. Therefore, the deceleration processing based on the sensed speed information is executed by the controller 22. Thus, it is less likely that a situation will occur in which the deceleration is inadequate to avoid the forward obstacle 2 or 3. Therefore, the forward obstacle 2 or 3 can be easily avoided regardless of the movement speed of the walking assistance moving vehicle 100.

Also, with the first embodiment, as discussed above, the walking assistance moving vehicle main body 17 and the distance sensor 15 that senses the distance (L1 or L2) to the forward obstacle 2 or 3 are further provided. The controller 22 is configured to perform control to decelerate the walking assistance moving vehicle main body 17 based on the distance (L1 or L2) to the forward obstacle 2 or 3 sensed by the distance sensor 15 and the speed sensed by the rotational angle sensors 21. Consequently, two pieces of information can be used, namely, information about the sensed distance to the forward obstacle 2 or 3 and information about sensed speed. Thus, better deceleration processing can be executed by the controller 22. As a result, it is less likely that a situation will occur in which the walking assistance moving vehicle main body 17 is not decelerated enough to avoid the forward obstacle 2 or 3. Therefore, the forward obstacle 2 or 3 can be more easily avoided.

Also, in the first embodiment, as discussed above, even if the distance L1 sensed by the distance sensor 15 is equal to or smaller than the threshold α, the controller 22 is configured not to execute control to decelerate the walking assistance moving vehicle main body 17 if the speed sensed by the rotational angle sensors 21 is equal to or smaller than the specific speed. Consequently, deceleration processing will not be executed by the controller 22 if the user U is approaching the upward forward obstacle 2 at a low speed, such as when the user U intentionally approaches the upward forward obstacle 2. This makes the walking assistance moving vehicle 100 more convenient to use for the user U.

### SECOND EMBODIMENT

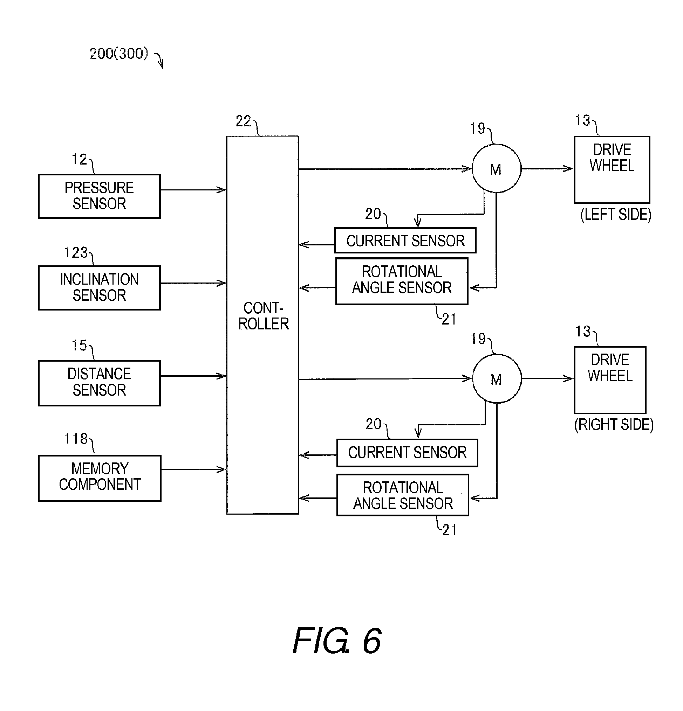

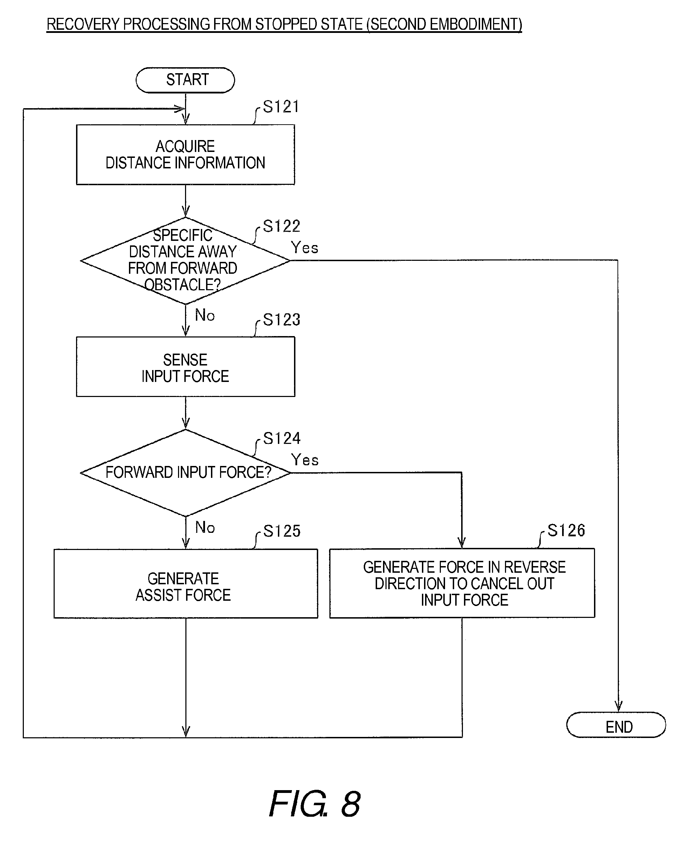

Referring now to FIGS. 6 to 8, a walking assistance moving vehicle 200 in accordance with a second embodiment will now be explained. In view of the similarity between the first and second embodiments, the parts of the second embodiment that are identical to the parts of the first embodiment will be given the same reference numerals as the parts of the first embodiment. Moreover, the descriptions of the parts of the second embodiment that are identical to the parts of the first embodiment may be omitted for the sake of brevity. In this second embodiment, unlike in the first embodiment above, an example will be described of setting the threshold α according to the speed of the walking assistance moving vehicle 200.

As shown in FIG. 6, the walking assistance moving vehicle 200 in accordance with the second embodiment includes the pressure sensor 12, the distance sensor 15, a memory component 118, and an inclination sensor 123. The walking assistance moving vehicle 200 also includes the pair of the drive wheels 13, the pair of the drive motors 19, the pair of the current sensors 20, the pair of the rotational angle sensors 21, and the controller 22. Those components that are the same as in the first embodiment illustrated in FIG. 2 will be numbered the same and will not be described again.

The memory component 118 is configured to store various kinds of data (such as distance thresholds), programs, and so forth. The memory component 118 is also configured to store past speed information about the walking assistance moving vehicle 200 for a specific length of time.

The inclination sensor 123 is configured to sense the inclination (inclination angle) of the walking assistance moving vehicle 200. The inclination sensor 123 is also configured to output the information about the sensed inclination to the controller 22. Any type of inclination sensor can be used for the inclination sensor 123, but examples include inclination sensors such as those that sense inclination from acceleration and those that sense inclination from angular velocity.

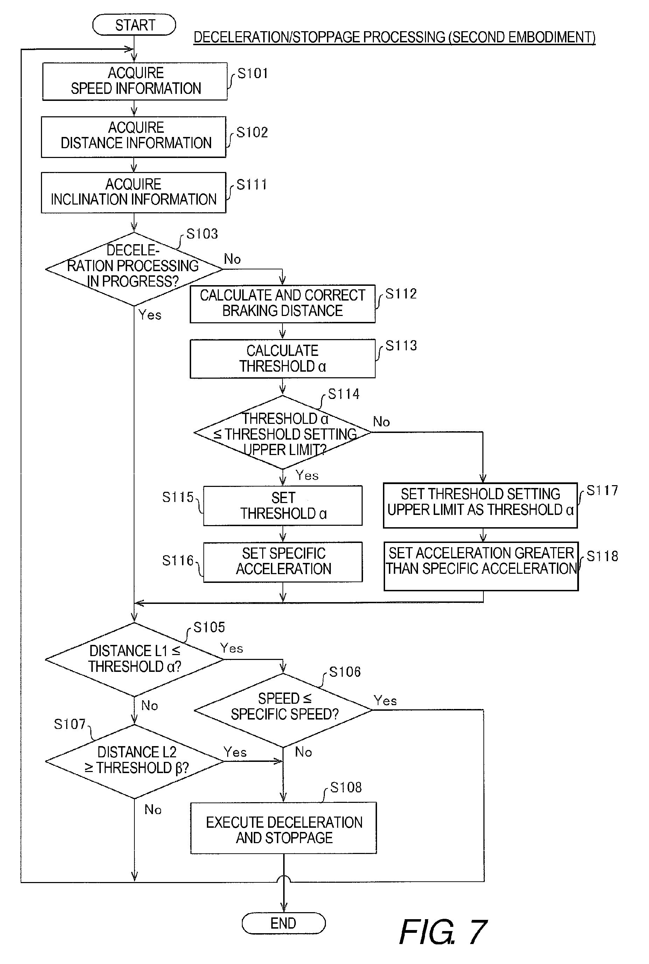

Processing for the deceleration or stoppage of the walking assistance moving vehicle 200 will now be described through reference to FIGS. 6 and 7. The parts of the processing that are the same as in the first embodiment shown in FIG. 5 will be numbered the same and will not be described again.

In the second embodiment, in step S111 the controller 22 (see FIG. 6) acquires inclination information about the walking assistance moving vehicle 200 (see FIG. 6) sensed by the inclination sensor 123 (see FIG. 6), in addition to speed information and distance information (steps S101 and S102). The controller 22 then proceeds to step S112 if the walking assistance moving vehicle 200 is not in the midst of deceleration processing in step S103.

In step S112, the controller 22 calculates the braking distance based on the speed sensed by the rotational angle sensors 21 (see FIG. 6) and the inclination sensed by the inclination sensor 123. The controller 22 first calculates the distance needed to decelerate from the speed sensed by the rotational angle sensors 21 to a stopped state at a specific acceleration, and then calculates the braking distance by correcting according to the inclination sensed by the inclination sensor 123. For instance, if the inclination sensor 123 senses that the path is uphill, the controller 22 corrects so that the distance needed to decelerate from the sensed speed to the stopped state at the specific acceleration will be shorter. If the inclination sensor 123 detects a downhill path, the controller 22 corrects to lengthen the distance needed to decelerate from the sensed speed to the stopped state at the specific acceleration.

In step S 112, the controller 22 corrects the calculated braking distance based on past speed information stored in the memory component 118 (see FIG. 6). More specifically, the controller 22 predicts the speed of the walking assistance moving vehicle 200 based on the past speed information that has been stored, and if an increase in speed is predicted, corrects the calculated braking distance to be longer based on the predicted speed.

Then, in step S113 the controller 22 calculates the threshold α based on the calculated braking distance. More specifically, if the speed is relatively high, then the calculated braking distance will be longer and the threshold α will be a larger value. If the speed is relatively low, then the calculated braking distance will be shorter and the threshold α will be a smaller value. The threshold α here is calculated as a value that is equal to or more than the calculated braking distance.

In step S114 the controller 22 determines whether or not the calculated threshold α is equal to or less than a threshold setting upper limit. The threshold setting upper limit here is the maximum value of the distance (L0, L1, L2) that can be sensed by the distance sensor 15.

If the threshold α is equal to or more than the threshold setting upper limit, then in step S 115 the controller 22 sets the value calculated in step S 113 as the threshold α. Then in step S116 the controller 22 sets a specific acceleration as the deceleration-use acceleration. The flow then proceeds to step S105.

If the threshold α is greater than the threshold setting upper limit, in step S117 the controller 22 sets the threshold setting upper limit as the threshold α. Then in step S118 the controller 22 sets an acceleration that is increased to be greater than the specific acceleration as the deceleration-use acceleration in order to decelerate the walking assistance moving vehicle 200 so that it will stop before reaching the forward obstacle 2 or 3. The processing operation from there on is the same as in steps S105 to S108 in FIG. 5.

In this second embodiment, in step S108 the controller 22 decelerates or stops the walking assistance moving vehicle 200 by retarding the timing at which decelerate is commenced, if the distance sensed by the distance sensor 15 is equal to or more than the threshold β and the braking distance is equal to or less than a specific distance. More specifically, the timing at which decelerate is commenced can be retarded by calculating from the rotational speed of the drive wheels 13 the distance by which the walking assistance moving vehicle 200 has advanced from the point when the threshold β is exceeded. The specific distance can be any distance as long as it allows the walking assistance moving vehicle 200 to stop before reaching the forward obstacle 2 or 3. For example, if the threshold setting upper limit is set as the specific distance, then the walking assistance moving vehicle 200 can be reliably stopped before reaching the forward obstacle 2 or 3.

Recovery processing from the stopped state of the walking assistance moving vehicle 200 after the vehicle has been decelerated or stopped will now be described through reference to FIGS. 1,6, and 8.

First, in step S121 the controller 22 (see FIG. 6) acquires the distance information sensed by the distance sensor 15 (see FIG. 6). Then in step S122, the controller 22 determines whether or not the walking assistance moving vehicle 200 (see FIG. 6) is a specific distance away from the forward obstacle 2 or 3 based on the acquired distance information. If the vehicle is the specific distance away, the controller 22 ends recovery processing from the stopped state.

If the vehicle is not the specific distance away, in step S123 the controller 22 senses the input force exerted by the user U on the pressure sensor 12 (see FIG. 6) via the grip component 11 (see FIG. 1). Then, in step S124, it is determined whether or not the input force is forward. If the input force is not forward, in step S125 the controller 22 generates an assist force (drive force from the drive motors 19). Specifically, the walking of the user U in a direction other than forward is assisted. If the input force is forward, then in step S126 the controller 22 uses the drive motors 19 to generate a force in the reverse direction (rearward) so as to cancel out the forward input force. That is, the torque needed to brake forward movement is calculated based on the magnitude of the input force, and a drive force in the reverse direction (rearward) is generated in the drive motors 19 based on the calculated torque. This limits the forward walking of the user U where the forward obstacle 2 or 3 is present. Recovery processing from this stopped state of the walking assistance moving vehicle 200 is repeated until the walking assistance moving vehicle 200 is a specific distance away from the forward obstacle 2 or 3.

The rest of the components in the second embodiment are the same as in the first embodiment above.

The second embodiment has the following effect.

As discussed above, with the second embodiment, the distance sensor 15 is configured to sense the distance L1 between the walking assistance moving vehicle main body 17 (walking assistance moving vehicle 200) and the upward forward obstacle 2, and the controller 22 is configured to perform control to decelerate the walking assistance moving vehicle main body 17 based on the distance L1 sensed by the distance sensor 15 and the threshold α set according to the speed sensed by the rotational angle sensors 21. Consequently, the controller 22 can execute deceleration processing based on the distance L1 and the threshold α set according to the speed. Thus, the first distance threshold set according to the speed can be used to make it less likely that a situation will occur in which the walking assistance moving vehicle main body 17 is not decelerated enough to avoid the upward forward obstacle 2. Therefore, the upward forward obstacle 2 can be avoided reliably.

Also, in the second embodiment, as discussed above, the controller 22 is configured to begin control to calculate the braking distance needed to decelerate the walking assistance moving vehicle main body 17 to the stopped state at the specific acceleration based on the speed sensed by the rotational angle sensors 21. The controller 22 is also configured to set the threshold α based on the calculated braking distance, and configured to decelerate the walking assistance moving vehicle main body 17 when the distance sensed by the distance sensor 15 has dropped equal to or less than the set threshold α. Consequently, the threshold α can be set based on the braking distance calculated based on the speed. Thus, a situation in which the walking assistance moving vehicle main body 17 is not decelerated enough to avoid the upward forward obstacle 2 can be easily and reliably made less likely to occur.

Also, in the second embodiment, as discussed above, the threshold α is configured to be set by the controller 22 to a value equal to or more than the calculated braking distance. Consequently, the deceleration processing can be executed by the controller 22 in a state in which the proper braking distance is ensured. Thus, a situation in which the walking assistance moving vehicle main body 17 is not decelerated enough to avoid the upward forward obstacle 2 can be more reliably made less likely to occur.

Also, in the second embodiment, as discussed above, the controller 22 is configured to perform control to set the threshold α equal to or less than the maximum value of the distance L1 that can be sensed by the distance sensor 15 and is calculated based on the braking distance. The controller 22 is also configured to set the value of the calculated threshold α to the maximum value of the distance L1 when the value of the threshold α calculated based on the braking distance is greater than the maximum value of the distance L1 that can be sensed, and configured to decelerate the walking assistance moving vehicle main body 17 in a state in which acceleration for decelerating the walking assistance moving vehicle main body 17 is increased so that it can stop before reaching the upward forward obstacle 2. Consequently, even if the threshold α calculated based on the braking distance is greater than the threshold setting upper limit sensed by the distance sensor 15 (the maximum value of the distance L1 that can be sensed), the braking force of the walking assistance moving vehicle 100 can be increased by increasing the acceleration used for deceleration. Thus, it will be more unlikely that a situation will occur in which the walking assistance moving vehicle main body 17 cannot be decelerated enough to avoid the upward forward obstacle 2.

Also, in the second embodiment, as discussed above, even if the distance L1 sensed by the distance sensor 15 is equal to or less than the threshold α, the controller 22 is configured not to perform control to decelerate the walking assistance moving vehicle main body 17 if the speed sensed by the rotational angle sensors 21 is equal to or less than the specific speed. Consequently, just as in the first embodiment, when the vehicle is approaching the upward forward obstacle 2 at a low speed, such as when the user U intentionally wants to move up to the upward forward obstacle, no deceleration processing will be executed by the controller 22. This makes the walking assistance moving vehicle 200 more convenient for the user U to use.

Also, in the second embodiment, as discussed above, the distance sensor 15 is configured to sense the distance L2 between the walking assistance moving vehicle main body 17 and the downward forward obstacle 3 in addition to the distance L1. The controller 22 is configured to perform control to retard the timing at which deceleration begins when the distance L2 sensed by the distance sensor 15 is equal to or large than the threshold β and the braking distance calculated based on the speed sensed by the rotational angle sensors 21 is equal to or smaller than the specific distance. With this configuration, the downward forward obstacle 3 is also sensed in addition to the upward forward obstacle 2. Thus, more forward obstacles can be avoided. Also, the timing at which deceleration begins can be retarded when the vehicle is approaching the downward forward obstacle 3 at low speed. Thus, it will be less likely that the deceleration processing will be performed too early, even if the user U should notice the downward forward obstacle 3 and change directions, etc.

Also, in the second embodiment, as discussed above, the controller 22 is configured to perform control to decelerate and stop the walking assistance moving vehicle main body 17 according to the speed sensed by the rotational angle sensors 21 and configured to limit the forward walking of the user U with respect to the stopped walking assistance moving vehicle main body 17. This easily prevents the user U from moving toward the forward obstacle 2 or 3 after the walking assistance moving vehicle 200 has stopped.

Also, in the second embodiment, as discussed above, there is further provided the inclination sensor 123 that senses the inclination (inclination angle) of the walking assistance moving vehicle main body 17. The controller 22 is configured to perform control to calculate the braking distance based on the inclination of the walking assistance moving vehicle main body 17 sensed by the inclination sensor 123, in addition to the speed sensed by the rotational angle sensors 21. Consequently, the braking distance can be accurately calculated even when the user U is walking over the ground 1 that is sloped, such as on a hill. Thus, more accurate deceleration control is possible.

Also, in the second embodiment, as discussed above, there is further provided the memory component 118 that stores the speed sensed by the rotational angle sensors 21. The controller 22 is configured to perform control to predict the speed of the walking assistance moving vehicle main body 17 based on the past speed information stored in the memory component 118, and configured to correct the braking distance based on the predicted speed when an increase in the speed of the walking assistance moving vehicle main body 17 is predicted. Consequently, since the braking distance can be corrected based on past speed information, it will be even less likely that a situation will occur in which the walking assistance moving vehicle main body 17 is not decelerated enough to avoid the forward obstacle 2 or 3.

The other effects of the second embodiment are the same as those of the first embodiment above.

### THIRD EMBODIMENT

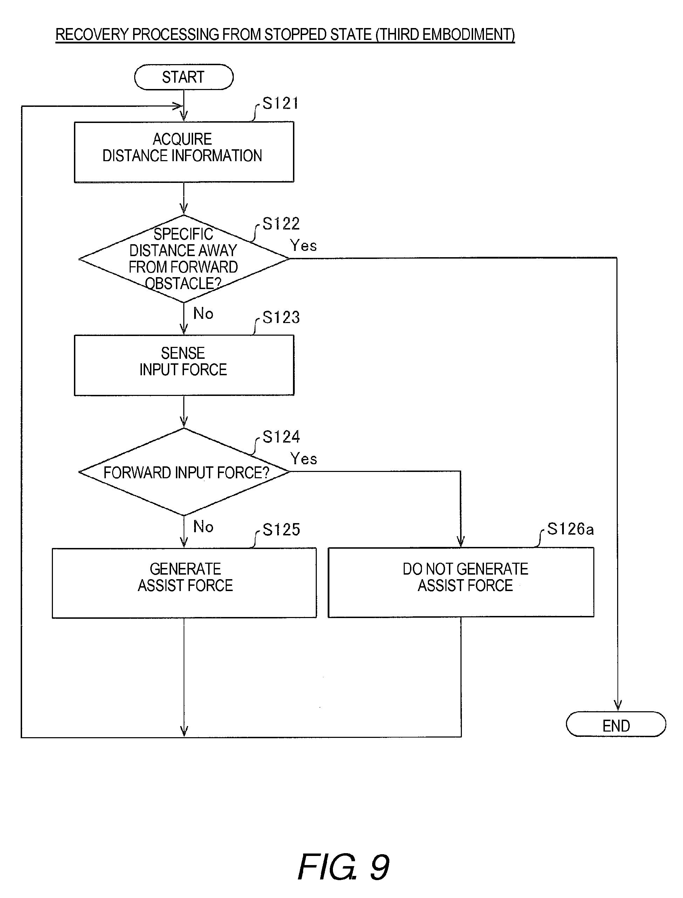

Referring now to FIG. 9, a walking assistance moving vehicle 300 in accordance with a third embodiment will now be explained. In view of the similarity between the first to third embodiments, the parts of the third embodiment that are identical to the parts of the first and second embodiments will be given the same reference numerals as the parts of the first and second embodiment. Moreover, the descriptions of the parts of the third embodiment that are identical to the parts of the first and second embodiments may be omitted for the sake of brevity. In this third embodiment, unlike in the second embodiment above, an example will be described in which no forward assist force is generated when a forward input force is detected in recovery processing from a stopped state.

The recovery processing from a stopped state of the walking assistance moving vehicle 300 in accordance with the third embodiment will be described through reference to FIG. 9. The parts of the processing that are the same as in the second embodiment shown in FIG. 6 will be numbered the same and will not be described again.

In the third embodiment, the controller 22 proceeds to step S126a when a forward input force is detected in step S124 after steps S121, S122 and S123. In step S126a the controller 22 does not generate drive force for forward walking by the drive motors 19, which is in contrast to the normal situation. In this case, the user U cannot benefit from the assist provided by the walking assistance moving vehicle 300, but will still be able to walk forward.

The rest of the components in the third embodiment are the same as in the second embodiment above.

The third embodiment has the following effect.

As discussed above, with the third embodiment, the controller 22 is configured to perform control to decelerate and stop the walking assistance moving vehicle main body 17 (the walking assistance moving vehicle 300) according to the speed sensed by the rotational angle sensors 21, and configured not to assist the forward walking of the user U with respect to the stopped walking assistance moving vehicle main body 17. This allows the user U to move farther forward at the discretion of the user U after the walking assistance moving vehicle 300 has stopped, when the use U decides that the user U is able to go beyond the forward obstacle 2 or 3, etc.

The other effects of the third embodiment are the same as those of the second embodiment above.

The embodiments disclosed herein are just examples in every respect, and should not be interpreted as being limiting in nature. The scope of the invention being indicated by the appended claims rather than by the above description of the embodiments, all modifications within the meaning and range of equivalency of the claims are included.

For example, in the first to third embodiments above, the deceleration and stoppage are executed when the walking assistance moving vehicle 100 (200, 300) satisfies the condition using the threshold α or the threshold β. However, but the present invention is not limited to this. With the present invention, a function can be provided for executing deceleration and stoppage as well as notifying the user U that deceleration and stoppage have begun. More specifically, this notification can be effected by sound or light, or a specific pattern of vibrations can be created during deceleration by the drive motors 19. Furthermore, if notification is effected by a specific pattern of vibrations, patterns corresponding to various factors can be used in order to tell the user U what has resulted in the deceleration and stoppage. For instance, the configuration can be such that the patterns can be different for the upward forward obstacle 2 and the downward forward obstacle 3. With this configuration for notifying the user U by means of a specific pattern of vibrations, since the notification can be effected by controlling the drive motors 19, the existing constituent components can be used to realize this notification function. Also, in this case, it is less likely that a situation will occur in which the user U fails to notice the notification, such as when a person who is hard of hearing misses a notification sound, or a notification light is overlooked because the user is focusing on what is ahead. Also, the user U can be more reliably apprised that deceleration and stoppage have begun by using a combination of sound and light for this notification.

Also, in the first to third embodiments above, the rotational angle sensors 21 are used as the "speed sensor" of the present invention, but the present invention is not limited to this. With the present invention, any speed sensor can be used as long as it is capable of sensing speed. For instance, an acceleration sensor can be used to sense speed, or speed can be sensed by using a GPS (global positioning system).

Also, in the first to third embodiments above, no deceleration or stoppage is executed if the speed sensed by the rotational angle sensors 21 is equal to or smaller than the specific speed, but the present invention is not limited to this. With the present invention, the configuration can be such that deceleration and stoppage are always executed if the distance L1 sensed by the distance sensor 15 is equal to or smaller than the threshold α.

Also, in the second embodiment above, the timing at which deceleration is begun is retarded when the sensed distance L2 is equal to or larger than the threshold β and the braking distance calculated based on the speed of the walking assistance moving vehicle 200 is equal to or smaller than the specific distance. However, the present invention is not limited to this. With the present invention, the configuration can be such that deceleration is always begun if the sensed distance L2 is equal to or larger than the threshold β.

Also, in the first to third embodiments above, a flow driven flowchart is used in which the processing of the controller 22 of the present invention is performed sequentially along with the processing flow, but the present invention is not limited to this. With the present invention, the processing operation of the controller 22 can be accomplished by event driven processing in which processing is executed for each event. In this case, the processing can be completely event driven, or can be a combination of event driven and flow driven.

The walking assistance moving vehicle in accordance with one aspect of this invention includes a walking assistance moving vehicle main body configured to assist walking of a user, a speed sensor configured to sense speed of the walking assistance moving vehicle main body, and a controller configured to decelerate the walking assistance moving vehicle main body according to the speed sensed by the speed sensor.

With the walking assistance moving vehicle in accordance with one aspect of this invention, as discussed above, the controller is provided to perform control to decelerate the walking assistance moving vehicle main body according to the speed sensed by the speed sensor. Thus, deceleration processing based on the sensed speed information can be executed by the controller. This means that a situation is less likely to occur in which the vehicle is not decelerated enough to avoid forward obstacles. Therefore, the forward obstacles can be easily avoided regardless of the movement speed of the walking assistance moving vehicle.

The walking assistance moving vehicle in accordance with one aspect of this invention further includes a distance sensor configured to sense distance between the walking assistance moving vehicle main body and a forward obstacle. The controller is further configured to decelerate the walking assistance moving vehicle main body based on the distance to the forward obstacle sensed by the distance sensor and the speed sensed by the speed sensor. With this configuration, the proper deceleration processing can be executed by the controller because two types of information are used, namely, information about the sensed distance to the forward obstacle, and the information about the sensed speed. Consequently, a situation is less likely to occur in which the walking assistance moving vehicle is not decelerated enough to avoid the forward obstacle. Thus, the forward obstacles can be avoided more easily.

In this case, the distance sensor is further configured to sense at least a first distance between the walking assistance moving vehicle main body and an upward forward obstacle. The controller is further configured to decelerate the walking assistance moving vehicle main body based on the first distance sensed by the distance sensor and a first distance threshold set according to the speed sensed by the speed sensor. With this configuration, the deceleration processing based on the first distance and the first distance threshold set according to the speed can be executed by the controller. Thus, the first distance threshold set according to the speed can be used to effectively reduce the likelihood of a situation in which the walking assistance moving vehicle main body is not decelerated enough to avoid the upward forward obstacle. Therefore, the forward obstacles can be reliably avoided.

With the configuration in which control is performed to decelerate the walking assistance moving vehicle main body based on the first distance threshold, the controller is further configured to calculate the braking distance to decelerate the walking assistance moving vehicle main body to a stationary state at a specific acceleration based on the speed sensed by the speed sensor, configured to set the first distance threshold based on the calculated braking distance, and configured to start decelerating the walking assistance moving vehicle main body in response to the distance sensed by the distance sensor being equal to or smaller than the first distance threshold. With this configuration, the first distance threshold is set based on the braking distance calculated based on the speed. Thus, the likelihood of a situation in which the walking assistance moving vehicle main body is not decelerated enough to avoid the upward forward obstacle can be easily and reliably decreased.

With the configuration in which the first distance threshold is set based on the braking distance, the first distance threshold is set to a value that is equal to or larger than the braking distance calculated by the controller. With this configuration, the deceleration processing can be executed by the controller in a state in which the braking distance has been acquired. Thus, it will be less likely that a situation will occur in which the walking assistance moving vehicle main body is not decelerated enough to avoid the upward forward obstacle.

With the configuration in which the first distance threshold is set based on the braking distance, the first distance threshold is calculated based on the braking distance and is set to be equal to or smaller than a maximum value of the first distance detectable by the distance sensor. The controller is further configured to set the maximum value of the first distance as the first distance threshold in response to the first distance threshold calculated based on the braking distance being greater than the maximum value of the first distance, and is further configured to decelerate the walking assistance moving vehicle main body in a state in which acceleration for decelerating the walking assistance moving vehicle main body is increased to stop before reaching the upward forward obstacle. With this configuration, if the first distance threshold calculated based on the braking distance is greater than the maximum value of the first distance that can be sensed by the distance sensor, then the braking force is increased by increasing the acceleration used for deceleration. Thus, it will be less likely that a situation will occur in which the walking assistance moving vehicle main body cannot be decelerated enough to avoid the upward forward obstacle.

In the configuration in which the first distance threshold is set based on the braking distance, the controller is further configured not to decelerate the walking assistance moving vehicle main body in response to the speed sensed by the speed sensor being equal to or smaller than a specific speed while the first distance sensed by the distance sensor is equal to or smaller than the first distance threshold. With this configuration, if the vehicle is approaching the upward forward obstacle at a low speed, such as when the user intentionally wants to move up to the upward forward obstacle, no deceleration processing will be executed by the controller. This makes the walking assistance moving vehicle more convenient for the user to use.

In the configuration in which the first distance threshold is set based on the braking distance, the distance sensor is further configured to sense a second distance between the walking assistance moving vehicle main body and a downward forward obstacle. The controller is further configured to retard a timing at which deceleration is commenced in response to the second distance sensed by the distance sensor being equal to or larger than a second distance threshold and in response to the braking distance calculated based on the speed sensed by the speed sensor being equal to or smaller than a specific distance. With this configuration, the downward forward obstacle can be detected in addition to the upward forward obstacle. Thus, more obstacles can be avoided. If the vehicle is approaching the downward forward obstacle at a low speed, then the timing at which deceleration is begun can be retarded. Thus, it is less likely that the deceleration processing will be performed too soon, even if the user notices the downward forward obstacle and changes direction, for example.

With the walking assistance moving vehicle in the above aspect, the controller is further configured to decelerate the walking assistance moving vehicle main body according to the speed sensed by the speed sensor to stop the walking assistance moving vehicle main body, and further configured to to limit the forward walking of the user or configured not to assist the forward walking of the user after the walking assistance moving vehicle main body stops. With this configuration, if the forward walking of the user is not assisted after then stop, then the vehicle can move farther forward at the discretion of the user. If the forward walking of the user is limited after the stop, then the user can easily prevent the vehicle from moving farther forward.

With the walking assistance moving vehicle in the above aspect, the vehicle further includes an inclination sensor configured to sense inclination of the walking assistance moving vehicle main body. The controller is further configured to calculate the braking distance based on the speed sensed by the speed sensor and the inclination of the walking assistance moving vehicle main body sensed by the inclination sensor. With this configuration, for example, the braking distance can be accurately calculated even when the user is walking on a sloped path, such as on a hill. Thus, accurate deceleration processing can be performed.

With the walking assistance moving vehicle in the above aspect, the vehicle further includes a memory component configured to store the speed sensed by the speed sensor. The controller is further configured to predict the speed of the walking assistance moving vehicle main body based on past speed information stored in the memory component, and configured to correct the braking distance based on the predicted speed in response to an increase in the speed of the walking assistance moving vehicle main body being predicted. With this configuration, the braking distance can be corrected based on past speed information. Thus, it will be less likely that a situation will occur in which the walking assistance moving vehicle main body is not decelerated enough to avoid the forward obstacle.

The present invention provides a walking assistance moving vehicle with which it is possible to easily avoid obstacles regardless of the movement speed.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts unless otherwise stated.

As used herein, the following directional terms "forward", "rearward", "front", "rear", "up", "down", "above", "below", "upward", "downward", "top", "bottom", "side", "vertical", "horizontal", "perpendicular" and "transverse" as well as any other similar directional terms refer to those directions of a walking assistance moving vehicle in an upright position. Accordingly, these directional terms, as utilized to describe the walking assistance moving vehicle should be interpreted relative to a walking assistance moving vehicle in an upright position on a horizontal surface. The terms "left" and "right" are used to indicate the "right" when referencing from the right side as viewed from the rear of the walking assistance moving vehicle, and the "left" when referencing from the left side as viewed from the rear of the walking assistance moving vehicle.

Also it will be understood that although the terms "first" and "second" may be used herein to describe various components these components should not be limited by these terms. These terms are only used to distinguish one component from another. Thus, for example, a first component discussed above could be termed a second component and vice-a-versa without departing from the teachings of the present invention. The term "attached" or "attaching", as used herein, encompasses configurations in which an element is directly secured to another element by affixing the element directly to the other element; configurations in which the element is indirectly secured to the other element by affixing the element to the intermediate member(s) which in turn are affixed to the other element; and configurations in which one element is integral with another element, i.e. one element is essentially part of the other element. This definition also applies to words of similar meaning, for example, "joined", "connected", "coupled", "mounted", "bonded", "fixed" and their derivatives. Finally, terms of degree such as "substantially", "about" and "approximately" as used herein mean an amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents.

## Claims

1. A walking assistance moving vehicle comprising:
a walking assistance moving vehicle main body configured to assist walking of a user;
a speed sensor configured to sense speed of the walking assistance moving vehicle main body; and
a controller configured to decelerate the walking assistance moving vehicle main body according to the speed sensed by the speed sensor.

2. The walking assistance moving vehicle according to claim 1, further comprising
a distance sensor configured to sense distance between the walking assistance moving vehicle main body and a forward obstacle,
the controller being further configured to decelerate the walking assistance moving vehicle main body based on the distance to the forward obstacle sensed by the distance sensor and the speed sensed by the speed sensor.

3. The walking assistance moving vehicle according to claim 2, wherein
the distance sensor is further configured to sense at least a first distance between the walking assistance moving vehicle main body and an upward forward obstacle, and
the controller is further configured to decelerate the walking assistance moving vehicle main body based on the first distance sensed by the distance sensor and a first distance threshold set according to the speed sensed by the speed sensor.

4. The walking assistance moving vehicle according to claim 3, wherein
the controller is further configured to calculate braking distance to decelerate the walking assistance moving vehicle main body to a stationary state at a specific acceleration based on the speed sensed by the speed sensor, configured to set the first distance threshold based on the braking distance, and configured to start decelerating the walking assistance moving vehicle main body in response to the distance sensed by the distance sensor being equal to or smaller than the first distance threshold.

5. The walking assistance moving vehicle according to claim 4, wherein
the first distance threshold is set to a value that is equal to or larger than the braking distance calculated by the controller.

6. The walking assistance moving vehicle according to claim 4 or 5, wherein
the first distance threshold is calculated based on the braking distance and is set to be equal to or smaller than a maximum value of the first distance detectable by the distance sensor, and
the controller is further configured to set the maximum value of the first distance as the first distance threshold in response to the first distance threshold calculated based on the braking distance being greater than the maximum value of the first distance, and is further configured to decelerate the walking assistance moving vehicle main body in a state in which acceleration for decelerating the walking assistance moving vehicle main body is increased to stop before reaching the upward forward obstacle.

7. The walking assistance moving vehicle according to any one of claims 4 to 6, wherein
the controller is further configured not to decelerate the walking assistance moving vehicle main body in response to the speed sensed by the speed sensor being equal to or smaller than a specific speed while the first distance sensed by the distance sensor is equal to or smaller than the first distance threshold.

8. The walking assistance moving vehicle according to any one of claims 4 to 7, wherein
the distance sensor is further configured to sense a second distance between the walking assistance moving vehicle main body and a downward forward obstacle, and
the controller is further configured to retard a timing at which deceleration is commenced in response to the second distance sensed by the distance sensor being equal to or larger than a second distance threshold and in response to the braking distance calculated based on the speed sensed by the speed sensor being equal to or smaller than a specific distance.

9. The walking assistance moving vehicle according to any one of claims 1 to 8, wherein
the controller is further configured to decelerate the walking assistance moving vehicle main body according to the speed sensed by the speed sensor to stop the walking assistance moving vehicle main body, and configured to limit forward walking of the user or configured not to assist the forward walking of the user after the walking assistance moving vehicle main body stops.

10. The walking assistance moving vehicle according to any one of claims 1 to 9, further comprising
an inclination sensor configured to sense inclination of the walking assistance moving vehicle main body,
the controller being further configured to calculate the braking distance based on the speed sensed by the speed sensor and the inclination of the walking assistance moving vehicle main body sensed by the inclination sensor.

11. The walking assistance moving vehicle according to any one of claims 1 to 10, further comprising
a memory component configured to store the speed sensed by the speed sensor,
the controller being further configured to predict the speed of the walking assistance moving vehicle main body based on past speed information stored in the memory component, and configured to correct the braking distance based on the predicted speed in response to an increase in the speed of the walking assistance moving vehicle main body being predicted.
